Europäisches Patentamt

European Patent Office

Office européen des brevets

(19)

(11) Numéro de publication : **0 402 183 B1**

(12) **FASCICULE DE BREVET EUROPEEN**

(45) Date de publication du fascicule du brevet :
23.12.92 Bulletin 92/52

(51) Int. Cl.⁵ : **B60T 13/575**

(21) Numéro de dépôt : **90401150.9**

(22) Date de dépôt : **27.04.90**

(54) **Procédé de réglage de la valeur du saut d'un servomoteur d'assistance au freinage.**

(30) Priorité : **31.05.89 FR 8907147**

(43) Date de publication de la demande :
**12.12.90 Bulletin 90/50**

(45) Mention de la délivrance du brevet :
**23.12.92 Bulletin 92/52**

(84) Etats contractants désignés :
**DE ES FR GB IT**

(56) Documents cités :
**DE-A- 2 834 510**
**GB-A- 2 080 457**
**US-A- 4 354 423**

(73) Titulaire : **BENDIX EUROPE Services
Techniques S.A.
126 rue de Stalingrad
F-93700 Drancy (FR)**

(72) Inventeur : **Gautier, Jean-Pierre, Bendix
Europe Services Tech.
126 rue de Stalingrad
F-93700 Drancy (FR)**

Jouve, 18, rue Saint-Denis, 75001 PARIS

EP 0 402 183 B1

## Description

L'invention concerne les servomoteurs d'assistance au freinage et s'applique plus particulièrement au réglage du saut de tels servomoteurs.

Un servomoteur d'assistance au freinage tel qu'il est connu du document US-4-A-354 423 comprend généralement une tige de commande qui se déplace vers l'avant lorsque le conducteur du véhicule actionne la pédale de frein. Ce déplacement de la tige de commande est transmis a un plongeur qui actionne des moyens d'assistance. Généralement, ces moyens d'assistance comprennent une valve trois voies dont l'actionnement permet d'interrompre la communication entre une chambre avant et une chambre arrière du servomoteur et de mettre cette dernière chambre à l'atmosphère. Etant donné que la chambre avant est normalement sous vide, une force d'assistance est ainsi exercée sur le piston qui sépare les deux chambres. Le piston se déplace alors vers l'avant en agissant sur une tige de poussée servant à actionner le maître-cylindre du circuit de freinage.

Habituellement, le piston servant à transmettre la force d'assistance a la tige de poussée agit sur cette dernière au travers d'un disque de réaction réalisé en un matériau déformable tel qu'un élastomère. Au repos, un faible jeu existe entre l'extrémité avant du plongeur et le disque de réaction. Lorsque le conducteur du véhicule commence à actionner la pédale de frein, ce faible jeu permet au plongeur de se déplacer immédiatement vers l'avant pour commander les moyens d'assistance et assurer une réponse immédiate des freins.

La transmission à la tige de poussée, au travers du disque de réaction, de la force d'assistance exercée sur le piston a pour effet de comprimer axialement la partie périphérique du disque de réaction proportionnellement à la force d'assistance. Cette compression de la partie périphérique du disque de réaction a pour conséquence une déformation de la partie centrale de ce disque vers la face avant du plongeur. Lorsque la force d'assistance dépasse un certain seuil, le jeu existant initialement au repos entre le disque de réaction et la face avant du plongeur est rattrapé, de sorte que le plongeur est en contact avec le disque de réaction et que ce dernier renvoie vers la pédale de frein une force de réaction représentative de l'effort de freinage appliqué sur les freins du véhicule. Cet agencement bien connu permet au conducteur de doser l'effort de freinage qu'il exerce sur la pédale en fonction de la résistance qu'il rencontre, qui augmente avec cet effort.

Il ressort de l'explication qui précède que la réaction à la pédale ne commence à apparaître que lorsque la force d'assistance engendrée par l'actionnement de la pédale de frein dépasse un certain seuil. Ce seuil est appelé le "saut" du servomoteur. Il constitue une caractéristique importante du servomoteur.

En effet, si l'existence du saut est imposée pour une réponse immédiate des freins lors d'un actionnement de la pédale, les constructeurs de véhicules automobiles souhaitent généralement que la valeur de ce saut reste dans certaines limites pour que l'assistance n'atteigne pas une valeur trop grande sans augmentation de la réaction à la pédale.

Cependant, compte tenu notamment des tolérances de fabrication des différentes pièces constituant le servomoteur, il peut exister des différences importantes dans la valeur du saut, d'un servomoteur à un autre. De même, les maîtres-cylindres destinés à être actionnés par la tige de poussée du servomoteur souffrent eux aussi d'une dispersion de leurs caractéristiques, si bien que les performances d'un ensemble servo-frein-maître-cylindre peuvent varier dans une plage exagérément étendue. De plus, il n'existe actuellement aucun moyen pratique pour maîtriser ou régler la valeur du saut du servomoteur, de sorte que les exigences précédemment mentionnées ne sont pas toujours satisfaites, sauf en se livrant à des contrôles complexes et onéreux.

La présente invention a précisément pour objet un procédé de réglage de la valeur du saut d'un servomoteur, qui puisse être mis en oeuvre de façon unitaire, c'est à dire que le saut de chaque servomoteur puisse être réglé indépendamment du saut d'un autre servomoteur, de façon simple et sans augmentation du coût du servomoteur ainsi réglé.

Elle a également pour objet de régler la valeur du saut d'un servomoteur en fonction des tolérances de fabrication du servomoteur et du maître-cylindre qui seront associés dans un circuit de freinage hydraulique, de façon à les apairer pour obtenir des performances identiques d'un ensemble servomoteur-maître-cylindre à l'autre.

Dans ces buts, l'invention propose un procédé de réglage de la valeur du saut d'un servomoteur d'assistance au freinage, dans lequel sont montés de façon mobile un piston creux d'assistance, une tige de commande portant un plongeur logé dans le piston et une tige de poussée, des moyens d'assistance étant commandés par un déplacement du plongeur vers l'avant et ayant pour effet de déplacer le piston vers l'avant, un disque de réaction étant interposé entre une face annulaire du piston et une face arrière de la tige de poussée, le servomoteur étant destiné à actionner un maître-cylindre, le procédé étant caractérisé en ce qu'il comporte les étapes suivantes :

- déterminer la force que le servomoteur doit exercer sur la tige de poussée au moment du saut pour actionner le maître-cylindre,
- exercer cette force sur la tige de poussée équipée du disque de réaction,
- mesurer la déformation de la partie centrale de la face arrière du disque de réaction,
- mesurer la distance entre la face avant annulaire du piston et la face avant du plongeur lorsque les moyens d'assistance sont dans leur position d'équilibre, et

- rendre cette distance égale à la déformation de la partie centrale de la face arrière du disque de réaction.

Un mode de réalisation particulier de l'invention va maintenant être décrit, à titre d'exemple nullement limitatif, en se référant aux dessins annexés dans lesquels :

- la Figure 1 est une vue de côté, en coupe longitudinale, représentant la partie centrale d'un servomoteur d'assistance au freinage dont la valeur du saut a été ajustée conformément à l'invention ;

- la Figure 2 est une vue en coupe longitudinale représentant à plus grande échelle le montage du disque de réaction sur le piston du servomoteur ;

- la Figure 3 est une courbe représentant schématiquement l'évolution de la force exercée sur la tige de poussée à la sortie du servomoteur en fonction de la force exercée sur la tige de commande à l'entrée du servomoteur ;

- la Figure 4 est une vue en coupe longitudinale d'un maître-cylindre de conception classique ;

- la Figure 5 est une courbe représentant schématiquement l'évolution de pression en sortie d'un maître-cylindre en fonction de la force exercée pour actionner ce maître-cylindre ;

- la Figure 6 est une courbe représentant schématiquement l'évolution de la pression en sortie d'un maître-cylindre en fonction de la force exercée à l'entrée du servomoteur actionnant ce maître-cylindre ;

- la Figure 7 est une vue en coupe longitudinale représentant l'extrémité arrière de la tige de poussée équipée de son disque de réaction en appui sur le piston du servomoteur, et

- la Figure 8 est une vue en coupe longitudinale représentant le plongeur de valve équipant le piston du servomoteur.

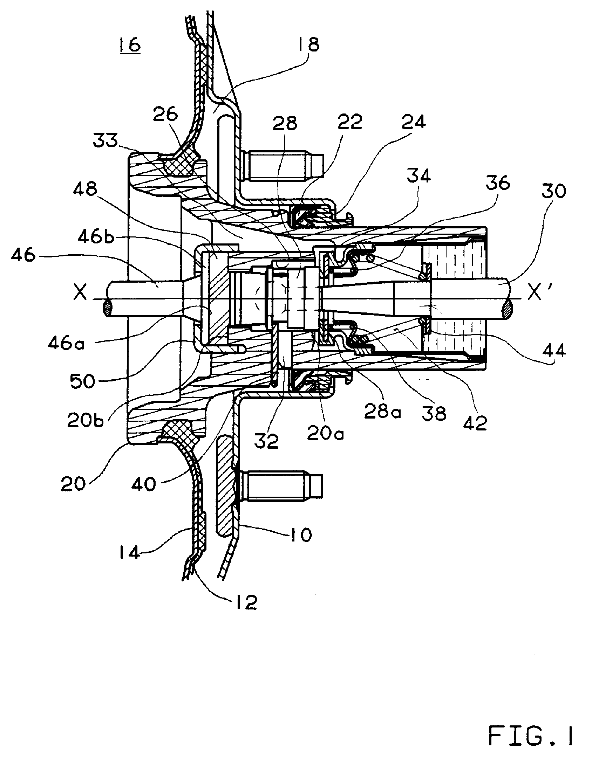

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure 1 comprend une enveloppe extérieure 10 en forme de coquille, présentant une symétrie de révolution autour d'un axe X-X. Seule la partie centrale arrière de cette enveloppe 10 est représentée sur la Figure 1.

Une membrane souple en élastomère 12, renforcée dans sa partie centrale par un disque support métallique 14, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X du servomoteur. Ce piston creux 20 se prolonge vers l'arrière sour la forme d'une partie tubulaire qui traverse de façon étanche la paroi arrière de l'enveloppe 10. L'étanchéité de cette traversée est assurée par un joint d'étanchéité annulaire armé 22 qui est fixé par une bague 24 dans une partie centrale tubulaire prolongeant vers l'arrière la paroi arrière de l'enveloppe 10.

Un ressort de compression (non représenté) interposé entre le piston 20 et la paroi avant (non représentée) de l'enveloppe extérieure 10 maintien normalement le piston dans une position arrière de repos illustrée sur la Figure 1, dans laquelle la chambre arrière 18 représente son volume minimal et la chambre avant 16 son volume maximal.

Dans sa partie centrale située entre la partie arrière tubulaire et la partie avant dans laquelle est fixée la membrane 12, le piston 20 présente un alésage étagé 26 dans lequel est reçu en coulissement un plongeur 28 présentant également une symétrie de révolution autour de l'axe X-X. L'extrémité avant d'une tige de commande 30 du servomoteur, disposée également selon l'axe X-X, est montée rotulante dans le plongeur 28. L'extrémité arrière (non représentée) de cette tige 30, qui fait saillie à l'extérieur de la partie tubulaire du piston 20, est commandée directement par la pédale de frein du véhicule.

L'espace annulaire délimité entre la tige de commande 30 et la partie tubulaire du piston 20 débouche vers l'extérieur, à l'arrière du servomoteur. Vers l'avant, ce même espage annulaire peut communiquer avec la chambre arrière 18 au travers d'un passage radial 32 formé dans la partie centrale du piston, lorsque des moyens d'assistance commandés par le plongeur 28 sont actionnés.

De façon classique, ces moyens d'assistance comprennent une valve trois voies comportant un clapet annulaire 34 monté dans la partie tubulaire du piston et deux sièges de valve annulaire 20a et 28a formés respectivement sur la partie centrale du piston 20 et sur le plongeur 28.

Le clapet 34 constitue l'extrémité avant, de plus petit diamètre, d'un manchon souple en élastomère dont l'extrémité arrière se termine par un bourrelet monté de façon étanche à l'intérieur de la partie tubulaire du piston 20. Ce bourrelet est maintenu en place par une coupelle métallique 36, sur laquelle prend appui un ressort de compression 38 tendant à déplacer le clapet 34 vers l'avant.

Le siège de valve annulaire 28a est formé sur la face d'extrémité arrière du plongeur 28. De façon comparable, le siège de valve annulaire 20a est formé sur la face d'extrémité arrière de la partie centrale du piston 20, autour du siège 28a. Selon la position du plongeur 28 à l'intérieur du piston 20, cet agencement permet au clapet 34 d'être constamment en appui étanche avec l'un au moins des sièges de valve 28a et 20a sous l'action du ressort 38.

Un second passage 33 est formé dans la partie centrale du piston 20, approximativement parallèlement à son axe X-X, pour faire communiquer la chambre avant 16 du servomoteur avec une chambre annulaire formée autour du clapet 34, à l'intérieur de la partie tubulaire du piston. Lorsque le plongeur 28 occupe sa position arrière de repos illustrée sur la figure 1, dans laquelle le clapet 34 est en appui étanche sur le siège 28a du plongeur et écarté du siège 20a du piston, les chambres avant 16 et arrière 18 du servomoteur communiquent ainsi entre elles par les passages 33 et 32.

D'une manière en elle-même connue, au moins un organe de butée 40 monté dans la partie centrale du piston 20 délimite la course axiale du plongeur 28 à l'intérieur de ce dernier. Le plongeur 28 est normalement maintenu dans la position arrière de repos définie par l'organe 40 au moyen d'un ressort de compression 42 interposé entre la coupelle 36 et une rondelle 44 elle-même en appui sur un épaulement formé sur la tige de commande 30.

Dans sa partie centrale, le piston 20 comprend une face avant annulaire 20b au centre de laquelle débouche l'alésage 26. Cette face avant annulaire 20b du piston 20 agit sur une face arrière 46b d'une tige de poussée 46, au travers d'un disque de réaction 48 en un matériau déformable tel qu'un élastomère. De façon plus précise, la tige de poussée 46 et le disque de réaction 48 sont disposés selon l'axe X-X du servomoteur, dans le prolongement de la tige de commande 30 et du plongeur 28.

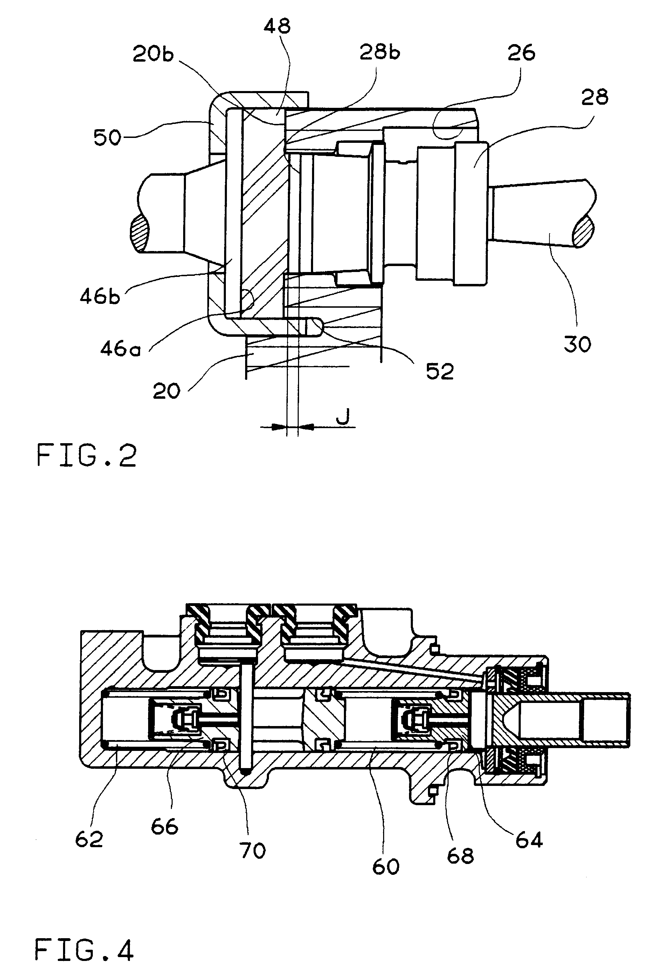

Comme l'illustre mieux la figure 2, la surface arrière 46a de la tige de poussée 46 est formée sur une plaque en forme de disque 46b constituant l'extrémité arrière de la tige 46. La plaque 46b ainsi que le disque de réaction 48 sont coiffés par un capot 50 centré sur l'axe X-X du servomoteur et coopérant avec une gorge annulaire 52 formée sur la partie centrale du piston 20, autour de la face avant annulaire 20b de ce dernier.

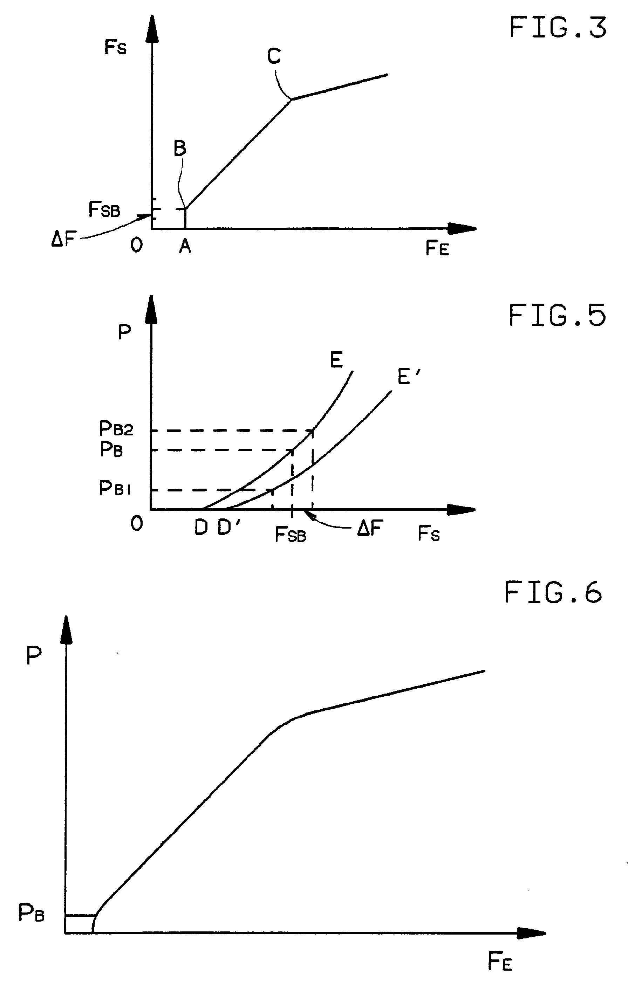

Si l'on désigne par $F_E$ la force appliquée à l'entrée du servomoteur sur la tige de commande 30 et par $F_S$ la force exercée par la tige de poussée 46 à la sortie du servomoteur, le fonctionnement de ce dernier va maintenant être décrit en se référant à la courbe de la figure 3.

Lorsque le servomoteur est installé sur un véhicule, la chambre avant 16 communique en permanence avec une source de vide.

Dans un premier temps, l'enfoncement de la pédale de frein par le conducteur a pour effet d'égaler l'effort de précontrainte du ressort 42 diminué de l'effort de précontrainte du ressort 38. Au cours du léger déplacement qui s'en suit, les chambres avant 16 et arrière 18 du servomoteur sont alors isolées l'une de l'autre. Dans cette première phase de l'actionnement du servomoteur, qui correspond au segment 0A sur la figure 3, la force exercée sur la tige de commande 30 n'engendre aucune force sur la tige de poussée 46 à la sortie du servomoteur.

Dans une deuxième phase de l'actionnement du frein correspondant au segment AB sur la figure 3, le plongeur 28 est déplacé suffisammment vers l'avant pour que le clapet 34 soit en contact étanche avec le siège 20a du piston et espacé du siège 28a du plongeur. Dans ces conditions, la chambre arrière 18 du servomoteur est isolée de la chambre avant 16 et communique avec l'atmosphère. Une force d'assistance est donc engendrée, qui tend à déplacer le piston 20 vers l'avant. Ce déplacement est transmis à la tige de poussée 46 par le disque de réaction 48.

Au cours de cette deuxième phase d'actionnement des freins, la force d'assistance exercée par le piston 20 ne déforme pas suffisamment le disque de réaction 48 pour que ce dernier remplisse totalement l'espace correspondant au jeu J qui le sépare initialement du plongeur 28. Par conséquent, la force de sortie $F_S$ appliquée au maître-cylindre par la tige de poussée 46 augmente brutalement jusqu'à la valeur $F_{SB}$ correspondant au point B sur la Figure 3, alors que la force exercée sur la tige de commande 30 reste inchangée.

Le point B sur la Figure 3 correspond au seuil pour lequel la force d'assistance engendrée dans le servomoteur et exercée sur le disque de réaction 48 par le piston 20 devient suffisante pour que la partie centrale du disque de réaction vienne au contact de la face avant 28b du plongeur 28, c'est à dire lorsque le jeu J est rattrapé. La longueur du segment AB correspond au saut du servomoteur.

Dans une troisième phase de l'actionnement du frein, qui correspond au segment BC sur la Figure 3, toute augmentation de l'effort exercé par le conducteur sur la tige de commande 30 engendre une augmentation de la force d'assistance exercée sur le piston, qui se traduit par une augmentation de la réaction à la pédale exercé par le disque 48 sur le plongeur 28, alors au contact l'un de l'autre.

Au cours des deuxième et troisième phases, la face avant du clapet 34 et les sièges 20a et 28a sont pratiquement alignés. On appelle cette position "position d'équilibre".

Au-delà du point C sur la Figure 3, la pression règnant dans la chambre arrière 18 du servomoteur est égale à la pression atmosphérique et une augmentation de la pression d'assistance n'est plus possible. L'augmentation de la force de sortie exercée par la tige de poussée 46 sur le maître-cylindre est alors sensiblement égale à l'augmentation de la force exercée par le conducteur sur la pédale de frein. Le siège 28a est alors nettement écarté du clapet 34.

Comme cela a déjà été indiqué, en fonction des tolérances de fabrication des différentes pièces constituant le servomoteur et des matériaux composant le disque de réaction, il peut exister des différences importantes dans la valeur du saut, d'un servomoteur à un autre, et pour une même force d'entrée, appliquée à différents servomoteurs, on obtiendra une force de sortie $F_{SB}$ + $\Delta F$.

De même, les maîtres-cylindres susceptibles d'être actionnés par la tige de poussée du servomoteur présentent eux aussi des tolérances de fabrication de leurs composants. Si l'on désigne par $F_S$ la force appliquée à l'entrée du maître-cylindre par la tige de poussée du servomoteur, et par P la pression hydraulique engendrée par le maître-cylindre dans le circuit de freinage, le fonctionnement du maître-cylindre va maintenant être décrit en se référant à la Figure 4 qui représente un maître-cylindre de conception classique et à la courbe de la Figure 5.

Dans un premier temps, l'effort exercé sur le maître-cylindre par la tige de poussée 46 du servomoteur a pour effet d'égaler la tare au repos des ressorts 60 et 62 des pistons 64 et 66 et de vaincre le frottement des coupelles 68 et 70. Dans cette première phase de l'actionnement du maître-cylindre, qui correspond au segment OD sur la Figure 3, la force exercée par la tige de poussée 46 du servomoteur n'engendre aucune pression hydraulique dans le circuit de freinage.

Dans une deuxième phase de l'actionnement du maître-cylindre, correspondante à la partie DE de la courbe de la Figure 5, les clapets de réalimentation du maître-cylindre sont fermés, et la pression commence à croître dans le circuit de freinage. En fonction des tolérances de fabrication du maître-cylindre, le segment OD sera plus ou moins long. De même, en fonction de la raideur des ressorts 60 et 62 et du frottement des coupelles 68 et 70, la pente de la partie DE sera plus ou moins accentuée, et on aura par exemple une courbe OD'E' pour un autre maître-cylindre.

Par conséquent, pour la valeur $F_{SB}$ + $\Delta F$ de la force appliquée au maître-cylindre correspondant au saut du servomoteur, une pression $P_B$ sera engendrée dans le circuit de freinage. On comprend donc que la dispersion des caractéristiques entre différents maîtres-cylindres s'ajoute à celle des caractéristiques entre différents servomoteurs, de sorte qu'une même force appliquée à la pédale de frein par le conducteur engendrera dans le circuit de freinage une pression hydraulique pouvant varier entre des valeurs intolérables, et en particulier la pression engendrée par un maître-cylindre lors du saut d'un servomoteur auquel il est associé pourra varier entre les valeurs $P_{B1}$ et $P_{B2}$ qui peuvent se trouver en dehors des valeurs tolérées.

Il est à noter que les courbes des Figures 3 et 5 sont en elles-mêmes connues et n'ont été mentionnées ici que pour mieux illustrer les inconvénients de l'art antérieur, de même que le maître-cylindre représenté sur la Figure 4.

Conformément à la présente invention, il est proposé un procédé de réglage pour diminuer ou même annuler la plage de variation des pressions hydrauliques engendrées par un maître-cylindre actionné par un servomoteur pour une même force appliquée à la tige de commande de ce servomoteur, en particulier lors du saut de ce servomoteur.

Plus précisément, on désire qu'un ensemble servomoteur-maître-cylindre présente en fonctionnement des caractéristiques bien précises, qui peuvent être résumées par la courbe de la Figure 6 donnant l'évolution de la pression à la sortie du maître-cylindre en fonction de la force exercée à l'entrée du servomoteur actionnant ce maître-cylindre, et que ces caractéristiques soient reproduites à l'identique pour de tels ensembles fabriqués en série.

Ainsi qu'on l'a mentionné plus haut, la caractéristique déterminante d'un tel ensemble est l'élévation de pression hydraulique à la sortie du maître-cylindre lors du saut du servomoteur.

Conformément à l'invention, après avoir déterminé la pression $P_B$ que doit fournir un maître-cylindre actionné par un servomoteur lors du saut de ce dernier, on détermine d'abord sur le maître-cylindre la courbe de la Figure 5 donnant la pression que celui-ci fournit en fonction de la force avec laquelle il est actionné et on obtient par exemple la courbe ODE. De la valeur de la pression $P_B$ que l'on désire obtenir, on déduit facilement la force $F_{SB}$ que ce servomoteur devra exercer sur le maître-cylindre et qui correspond à la valeur du saut du servomoteur.

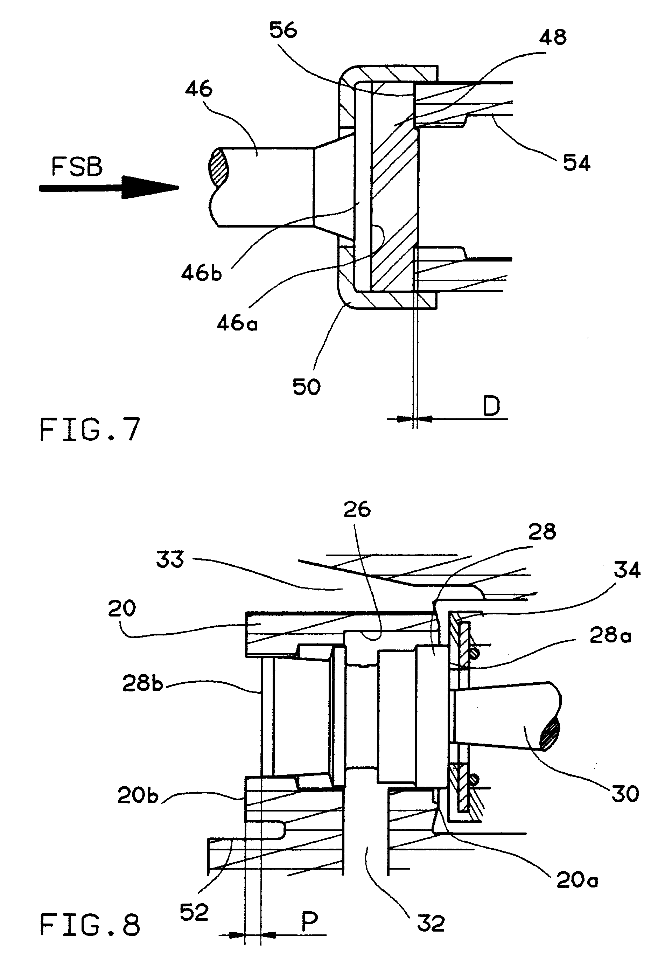

La tige de poussée 46, équipée du disque de réaction 48 et du capot 50, est disposée sur une embase 54 (Figure 7) présentant une face annulaire 56 identique à la face avant annulaire 20b du piston 20 du servomoteur qui recevra la tige de poussée 46.

Une force F, égale à la force $F_{SB}$ déterminée précédemment, est alors appliquée sur la tige de poussée 46 vers l'embase 54 maintenue fixe. On mesure alors la déformation de la partie centrale de la face arrière du disque de réaction 48 à l'intérieur de l'embase 54, qui est égale à la distance D entre le plan contenant la face annulaire 56 et le plan parallèle au précédent, tangent à la partie du disque 48 la plus éloignée de la face arrière 46a de la tige de poussée 46.

D'après les explications qui précèdent, il est clair que cette distance D est celle pour laquelle le jeu J entre le plongeur 28 et le disque de réaction 48 devra s'annuler lorsque la force d'assistance, exercée dans le servomoteur qui recevra la tige de poussée 46 et le disque de réaction 48, atteindra la valeur $F_{SB}$ correspondant au saut désiré du servomoteur.

Dans ces conditions, il faut alors que la pénétration du plongeur 28 dans l'alésage 26 du piston 20 soit telle que pour cette distance D entre le plan contenant la face avant 28b du plongeur 28 et le plan contenant la face avant annulaire 20b du piston 20, la valve à trois voies située derrière le plongeur 28 soit en position d'équilibre.

Pour ce faire, après assemblage du plongeur 28 et de la valve à trois voies dans l'alésage 26 du piston 20, une force est exercée sur la tige de commande 30, tout d'abord pour rattraper la course morte initiale entre le clapet 34 et le siège de valve 20a formé sur le piston 20 (Figure 8). A ce moment, la communication entre les passages 32 et 33 est interrompue, et les chambres avant 16 et arrière 18 sont isolées.

Une légère force supplémentaire appliquée à la tige de commande 30 déplacera encore le plongeur 28 vers l'avant de façon à éloigner le siège 28a du clapet 34. L'ouverture de ce clapet peut être facilement détectée, en mesurant par exemple la fuite entre l'espace situé derrière le clapet 34 et le passage 32. Dans cette position, la valve à trois voies est dans sa position d'équilibre, correspondant au saut du servomoteur, comme expliqué plus haut.

On immobilise alors l'ensemble dans cette position et on mesure la distance P entre le plan de la face avant annulaire 20b du piston 20 et la face avant 28b du plongeur 28. Conformément à l'invention, il faut que cette distance P soit égale à la distance D déterminée précédemment sur le disque de réaction 48 pour que l'ensemble disque de réaction 48-piston 20-plongeur 28 fournisse un servomoteur dont le saut ait les caractéristiques voulues.

Ceci peut être réalisé simplement soit par usinage de la face avant annulaire 20b du piston 20, soit par usinage de la face avant 28b du plongeur 28, soit par adjonction de cliquants sur la face 20b ou sur la face 28b, soit par combinaison d'usinage d'une face et adjonction de cliquants sur l'autre, jusqu'à ce que la distance P soit égale à D.

Une fois la distance P ajustée, il ne reste plus qu'à assembler la tige de poussée 46 munie du disque de réaction 48 avec lequel on a mesuré la distance D, sur le piston 20 et le plongeur 28 qui viennent d'être usinés pour obtenir le servomoteur ayant le fonctionnement requis.

On peut alors équiper le servomoteur une fois assemblé avec le maître-cylindre avec lequel on a mesuré $F_{SB}$ pour obtenir un ensemble qui présentera les caractéristiques requises. C'est ce que montre l'expérience, où, pour un grand nombre de tels ensembles, les courbes de la Figure 6 ont été placées expérimentalement et où la dispersion des caractéristiques est pratiquement négligeable, et en tout cas bien en deça des tolérances permises.

On a donc bien réalisé un servomoteur dont la valeur du saut est maîtrisée grâce au procédé selon l'invention. De plus, le procédé de l'invention permet un réglage unitaire des pièces principales du servomoteur qui conditionnent la valeur du saut. Enfin, le servomoteur ainsi obtenu sera parfaitement adapté à actionner un maître-cylindre particulier, celui à l'aide duquel on a déterminé la force $F_{SB}$ pour laquelle on désire que le servomoteur effectue le saut, et on a donc bien obtenu un apairage d'un maître-cylindre et d'un servomoteur. On comprendra que l'invention s'applique à tous les servomoteurs d'assistance au freinage, qu'elle que soit leur structure particulière. De même, le maître-cylindre pourra être caractérisé par une courbe de l'évolution de la course d'actionnement en fonction de la force d'actionnement.

## Revendications

1. Procédé de réglage de la valeur de saut d'un servomoteur d'assistance au freinage, dans lequel sont montés de façon mobile un piston creux d'assistance (20), une tige de commande (30) portant un plongeur (28) logé dans le piston (20) et une tige de poussée (46), des moyens d'assistance (34, 20a, 28a) étant commandés par un déplacement du plongeur (28) vers l'avant et ayant pour effet de déplacer le piston (20) vers l'avant, un disque de réaction (48) étant interposé entre une face avant annulaire (20b) du piston (20) et une face arrière (46a) de la tige de poussée, le servomoteur étant destiné à actionner un maître-cylindre, le procédé étant caractérisé en ce qu'il comporte les étapes suivantes :
   - déterminer la force ($F_{SB}$) que le servomoteur doit exercer sur la tige de poussée (46) pour actionner le maître-cylindre,
   - exercer cette force ($F_{SB}$) sur la tige de poussée (46) équipée du disque de réaction (48),
   - mesurer la déformation (D) de la partie centrale de la face arrière du disque de réaction (48),
   - mesurer la distance (P) entre la face avant annulaire (20b) du piston (20) et la face avant (28b) du plongeur (28) lorsque les moyens d'assistance (34, 20a, 28a) sont dans leur position d'équilibre, et
   - rendre cette distance (P) égale à la déformation (D) de la partie centrale de la face arrière du disque de réaction (48).

2. Procédé selon la revendication 1, caractérisé en ce que la force ($F_{SB}$) que le servomoteur doit exercer sur la tige de poussée (46) pour actionner le maître-cylindre est déterminée en fonction d'une pression ($P_B$) que l'on désire obtenir dans le circuit de freinage.

3. Procédé selon la revendiction 1, caractérisé en ce que la force ($F_{SB}$) que le servomoteur doit exercer sur la tige de poussée (46) pour actionner le maître-cylindre est déterminée en fonction d'une course d'actionnement du maître-cylindre.

4. Procédé selon la revendication 1, caractérisé en ce que pour exercer la force (F<sub>SB</sub>) sur la tige de poussée (46) équipée du disque de réaction (48), la tige de poussée (46) est disposée sur une embase (54) présentant une face avant annulaire (56) identique à la face avant annulaire (20b) du piston (20).

5. Procédé selon la revendication 1, caractérisé en ce que la déformation (D) de la partie centrale de la face arrière du disque de réaction (48) est mesurée par la distance (D) entre un plan contenant la face avant annulaire (20b, 56) et un plan parallèle au précédent tangent à la partie du disque de réaction (48) la plus éloignée de la face arrière (46a) de la tige de poussée (46).

6. Procédé selon la revendication 1, caractérisé en ce que la distance (P) entre la face avant annulaire (20b) du piston (20) et la face avant (28b) du plongeur (28) est rendue égale à la déformation (D) par usinage de la face avant annulaire (20b) du piston (20) et/ou par usinage de la face avant (28b) du plongeur (28) et/ou par adjonction de clinquants sur la face avant annulaire (20b) du piston (20) et/ou par adjonction de clinquants sur la face avant (28b) du piston (28).

**Patentansprüche**

1. Verfahren zum Einstellen des Wertes des Ansprechsprungs eines Bremskraftverstärker-Servomotors, in dem ein hohler Druckverstärkerkolben (20), eine Betätigungsstange (30) mit einem im Kolben (20) untergebrachten Tauchkolben (28) und eine Schubstange (46) beweglich angebracht sind, wobei eine Druckverstärkungseinrichtung (34, 20a, 28a) durch eine Verschiebung des Tauchkolbens (28) nach vorne betätigt wird, was zur Folge hat, daß der Kolben (20) nach vorne verschoben wird, wobei ein Gegenkraftteller (48) zwischen der ringförmigen Vorderfläche (20b) des Kolbens (20) und einer Rückfläche (46a) der Schubstange angebracht ist, welcher Servomotor dazu bestimmt ist, einen Hauptzylinder zu betätigen, welches Verfahren dadurch gekennzeichnet ist, daß es die folgenden Schritte aufweist:
   - Bestimmen der Kraft (F<sub>SB</sub>), die der Servomotor auf die Schubstange (46) ausüben muß, um den Hauptzylinder zu betätigen,
   - Ausüben dieser Kraft (F<sub>SB</sub>) auf die Schubstange (46), die mit dem Gegenkraftteller (48) ausgestattet ist,
   - Messen der Verformung (D) des mittleren Teils der hinteren Fläche des Gegendrucktellers (48),

   - Messen des Abstandes (P) zwischen der vorderen Ringfläche (20b) des Kolbens (20) und der vorderen Fläche (28b) des Tauchkolbens (28), wenn sich die Druckverstärkungseinrichtung (34, 20a, 28a) in ihrer Gleichgewichtsstellung befindet, und
   - Herbeiführen von Übereinstimmung dieses Abstandes (P) mit der Verformung (D) des mittleren Teils der hinteren Fläche des Gegendrucktellers (48).

2. Verfahren nach Anspruch 1, dadurch gekennzeichnet, daß die Kraft (F<sub>SB</sub>), die der Servomotor auf die Schubstange (46) ausüben muß, um den Hauptzylinder zu betätigen, als Funktion eines Drucks (P<sub>B</sub>) festgelegt ist, der im Bremskreis erhalten werden soll.

3. Verfahren nach Anspruch 1, dadurch gekennzeichnet, daß die Kraft (F<sub>SB</sub>), die der Servomotor auf die Schubstange (46) ausüben soll, um den Hauptzylinder zu betätigen, als Funktion eines Betätigungshubs des Hauptzylinders bestimmt ist.

4. Verfahren nach Anspruch 1, dadurch gekennzeichnet, daß, um die Kraft (F<sub>SB</sub>) auf die mit dem Gegendruckteller (48) versehene Schubstange (46) ausüben zu können, letztere auf einer Befestigungsplatte (54) angeordnet ist, die eine ringförmige Vorderfläche (56) aufweist, die mit der ringförmigen Vorderfläche (20b) des Kolbens (20) übereinstimmt.

5. Verfahren nach Anspruch 1, dadurch gekennzeichnet, daß die Verformung (D) des mittleren Teils der hinteren Fläche des Gegenkrafttellers (48) durch den Abstand (D) zwischen einer die ringförmigen Vorderfläche (20b, 56) enthaltenden Ebene und einer zur vorstehend genannten parallelen Ebene gemessen wird, die denjenigen Teil des Gegendrucktellers (48) berührt, der am weitesten von der hinteren Fläche (46a) der Schubstange (46) entfernt ist.

6. Verfahren nach Anspruch 1, dadurch gekennzeichnet, daß der Abstand (P) zwischen der vorderen Ringfläche (20b) des Kolbens (20) und der Vorderfläche (28b) des Tauchkolbens (28) mit der Verformung (D) durch Bearbeitung der vorderen Ringfläche (20b) des Kolbens (20) und/oder durch Bearbeitung der Vorderfläche (28b) des Tauchkolbens (28) und/oder durch Hinzufügen von Beilagplättchen auf die vordere Ringfläche (20b) des Kolbens 20 und/oder durch Hinzufügen von Beilagplättchen auf die Vorderfläche (28b) des Kolbens (28) zu Übereinstimmung gebracht wird.

**Claims**

1. Process for adjusting the value of the pump of a brake booster, in which are movably mounted a hollow boosting piston (20), a control rod (30) carrying a plunger (28) seated in the piston (20) and a push rod (46), boosting means (34, 20a, 28a) being controlled as a result of a forward movement of the plunger (28) and their effect being to move the piston (20) forwards, a reaction disc (48) being interposed between an annular front face (20b) of the piston (20) and a rear face (46a) of the push rod, the booster being intended for actuating a master cylinder, the process being characterized in that it involves the following steps:
   - determining the force ($F_{SB}$) which the booster must exert on the push rod (46) in order to actuate the master cylinder,
   - exerting this force ($F_{SB}$) on the push rod (46) equipped with the reaction disc (48),
   - measuring the deformation (D) of the central part of the rear face of the reaction disc (48),
   - measuring the distance (P) between the annular front face (20b) of the piston (20) and the front face (28b) of the plunger (28) when the boosting means (34, 20a, 28a) are in their position of equilibrium, and
   - making this distance (P) equal to the deformation (D) of the central part of the rear face of the reaction disc (48).

2. Process according to Claim 1, characterized in that the force ($F_{SB}$) which the booster must exert on the push rod (46) in order to actuate the master cylinder is determined as a function of a pressure ($P_B$) which it is desired to obtain in the brake circuit.

3. Process according to Claim 1, characterized in that the force ($F_{SB}$) which the booster must exert on the push rod (46) in order to actuate the master cylinder is determined as a function of an actuating stroke of the master cylinder.

4. Process according to Claim 1, characterized in that, in order to exert the force ($F_{SB}$) on the push rod (46) equipped with the reaction disc (48), the push rod (46) is arranged on a base (54) having an annular front face (56) identical to the annular front face (20b) of the piston (20).

5. Process according to Claim 1, characterized in that the deformation (D) of the central part of the rear face of the reaction disc (48) is measured by the distance (D) between a plane containing the annular front face (20b, 56) and a plane parallel to the preceding one and tangent to that part of the reaction disc (48) furthest away from the rear face (46a) of the push rod (46).

6. Process according to Claim 1, characterized in that the distance (P) between the annular front face (20b) of the piston (20) and the front face (28b) of the plunger (28) is made equal to the deformation (D) by machining the annular front face (20b) of the piston (20) and/or by machining the front face (28b) of the plunger (28) and/or by the addition of shims to the annular front face (20b) of the piston (20) and/or by the addition of shims to the front face (28b) of the piston (28).

FIG. 1

FIG.2

FIG.4

FIG.3

FIG.5

FIG.6

FIG.7

FIG.8